# EUROPÄISCHE PATENTSCHRIFT

(11) **EP 2 885 135 B1**
(45) Veröffentlichungstag und Bekanntmachung des Hinweises auf die Patenterteilung: **10.01.2018**
(21) Anmeldenummer: 14700926.0
(22) Anmeldetag: 20.01.2014
(51) Int. Cl.: B42D 15/00, G02B 5/18, B42D 25/00, B42D 25/324, B42D 25/328, B42D 25/29

(54) **SICHERHEITSEINRICHTUNG**
SECURITY DEVICE
DISPOSITIF DE SÉCURITÉ

(30) Priorität: 12.02.2013 EP 13154954
(43) Veröffentlichungstag der Anmeldung: 24.06.2015
(73) Patentinhaber: Sectago GmbH, 66123 Saarbruecken (DE)
(72) Erfinder: SEILS, Frank, 79692 Kleines Wiesental (DE); KOCH, Markus, 66953 Pirmasens (DE); ROGIN, Peter, 66123 Saarbrücken (DE)
(74) Vertreter: WSL Patentanwälte Partnerschaft mbB
(86) Internationale Anmeldenummer: PCT/EP2014/051039
(87) Internationale Veröffentlichungsnummer: WO 2014/124781

(56) Entgegenhaltungen:
- WO-A1-02/03109
- WO-A1-94/28444
- WO-A1-95/02200

## Beschreibung

Die Erfindung betrifft eine Sicherheitseinrichtung zur Verbesserung der Fälschungssicherheit von schützenswerten Artikeln, insbesondere Originalartikeln wie beispielsweise Produkte, Marken, Eintrittskarten und Dokumente, insbesondere von Hochsicherheitsdokumenten wie beispielsweise Personaldokumenten und Zahlungsmitteln.

Bei Hochsicherheitsdokumenten, insbesondere bei Personaldokumenten, wie Reisepässen, Personalausweisen, Führerscheinen und dgl. sowie Zahlungsmitteln, wie Kreditkarten, Geldscheinen und dgl. ist eine Vielzahl von Sicherheitseinrichtungen vorgesehen. Hierbei handelt es sich beispielsweise um das Vorsehen von durch das menschliche Auge sichtbaren Sicherheitseinrichtungen, wie Hologramme. Ferner sind für das menschliche Auge nicht sichtbare oder nur bei speziellem Licht sichtbare Sicherheitseinrichtungen vorgesehen, die beispielsweise durch in das Hochsicherheitsdokument eingebrachte Farbpigmente erzeugt sind.

WO 94/28444 A1 und WO 95/02200 A1 beschreiben die Herstellung und Funktion diffraktiver Sicherheitsmerkmale, die durch die Kombination verschiedener konventioneller diffraktiver Sicherheitsmerkmale wie Pixelgramm, Kinegramm, mathematisches Hologramm und dergleichen entstehen. Im Falle von WO 95/02200 A1 wird die Kombination durch die Überlagerung der zugehörigen Gitterstrukturen in mindestens einem Teil der Fläche des kombinierten Sicherheitsmerkmals erzeugt. WO 94/28444 A1 bezieht sich dagegen auf ein pixeliertes Sicherheitsmerkmal, dessen einzelne Pixel in Subpixel unterteilt sind, wobei jedes einzelne dieser Subpixel gemäß genau einem der ursprünglichen Sicherheitsmerkmale ausgestaltet ist. Die Gesamtheit der Subpixel wird damit in Gruppen von Subpixeln unterteilt, wobei jede Gruppe genau eines der ursprünglichen Sicherheitsmerkmale darstellt. Die Anordnung der Subpixel einer Gruppe folgt dabei einem regelmäßigen Muster, da innerhalb der übergeordneten Pixel des kombinierten Sicherheitsmerkmals die Zuordnung der Subpixel zu der jeweiligen Gruppe gleich bleibt.

Sowohl WO 94/28444 A1 als auch WO 95/02200 A1 beschreiben damit Möglichkeiten, verschiedene diffraktive Sicherheitsmerkmale derart zu überlagern, dass der Betrachter diese Merkmale auf derselben Fläche wahrnehmen kann, wobei die Sichtbarkeit der einzelnen Merkmale durch die Kombination von Beleuchtungs- und Betrachtungswinkeln beeinflusst wird.

Aus WO 2010/115936 ist eine Sicherheitseinrichtung, die insbesondere für Zahlungsmittel geeignet ist, bekannt. Diese weist eine Reflektionsschicht, wie eine Aluminiumfolie, auf, auf deren Oberseite eine Vielzahl diffraktiver Oberflächenelemente angeordnet ist. Die einzelnen Oberflächenelemente weisen eine sinusförmige Oberflächenstruktur zur Erzeugung eines Beugungsgitters auf. Die einzelnen Oberflächenelemente sind hierbei derart ausgebildet, dass einfallendes Licht derart gebeugt wird, dass für den Beobachter ein Eindruck ähnlich des natürlichen Asterismus entsteht. Ein Beobachter erkennt somit beispielsweise ein sternförmiges Symbol, das in einer Bildebene um sich selbst rotiert.

Eine Sicherheitseinrichtung mit einem anderen Bewegungseffekt wird in WO02/03109 beschrieben. Hierbei handelt es sich um ein holographisches optisch variables Bild, das durch eine als Funktion des Ortes kontinuierlich variable Gitterstruktur erzeugt wird. Die Darstellung dieses Bildes folgt einer vorbestimmten Bahn, wenn die Sicherheitseinrichtung in einer ersten Richtung verkippt wird. Um eine scharfe Abbildung bei Betrachtung unter weißem Licht zu erreichen, wird dabei nach Art eines Regenbogenhologramms nur ein enger Wellenlängenbereich gezeigt, der von der Rotation der Sicherheitseinrichtung senkrecht zu der ersten Richtung abhängt. Bei einer Verkippung in dieser zweiten Richtung wird also keine Bewegung, sondern stattdessen ein Farbwechsel wahrgenommen.

Trotz der bereits bestehenden Vielzahl von Sicherheitseinrichtungen besteht weiterhin das Bedürfnis der Entwicklung einer möglichst fälschungssicheren Sicherheitseinrichtung, die maschinell oder auch vom bloßen Auge erkannt werden kann.

Aufgabe der Erfindung ist es, eine derartige Sicherheitseinrichtung zu schaffen.

Die Lösung der Aufgabe erfolgt erfindungsgemäß durch eine Sicherheitseinrichtung zur Verbesserung der Fälschungssicherheit von Artikeln gemäß Anspruch 1.

Gemäß einem Aspekt der Erfindung weist die Sicherheitseinrichtung auf einem Trägerelement eine Vielzahl diffraktiver Oberflächenelemente auf. Die von den Oberflächenelementen bedeckte Fläche kann einen beliebig geformten Teilbereich des Trägerelementes einnehmen. Die einzelnen Oberflächenelemente können unterschiedliche Grundflächen, wie Kreise, Vielecke etc. oder Kombinationen aufweisen. An ihrer Oberseite, an der das Licht gebeugt wird, ist eine Oberflächenstruktur vorgesehen. Bei der Oberflächenstruktur handelt es sich insbesondere um ein Beugungsgitter mit einem beliebigen, beispielsweise sinusförmigen, rechteckigen oder dreieckigen Oberflächenprofil. Auch kann die beliebige Grundform des Oberflächenprofils als Stufenprofil ausgelegt sein. Diese Beugungsgitter können transparent auf einem transparenten oder reflektierenden Trägerelement oder auch selbst reflektierend ausgebildet sein.

Infolge ihrer Oberflächenstruktur lenken die Oberflächenelemente einfallendes Licht in bestimmte Richtungen ab. Bei der Verwendung von Beugungsgittern erfolgt insbesondere eine Aufspaltung des einfallenden Lichts im mehrere Beugungsordnungen, wobei jede Beugungsordnung einer charakteristischen Richtungsänderung des gebeugten Lichts entspricht. Die folgenden Ausführungen beziehen sich nun zunächst auf eine einzelne dieser Beugungsordnungen.

Gemäß einem Aspekt der Erfindung bilden jeweils mehrere, vorzugsweise über die gesamte Fläche verteilt angeordnete Oberflächenelemente eine Oberflächenelementen-Gruppe. Die Oberflächenstrukturen der einzelnen Oberflächenelemente einer derartigen Gruppe sind derart aufeinander abgestimmt, dass bei beliebigen Beobachtungsbedingungen, d.h., einer beliebigen Kombination von Lichteinfalls- und Betrachtungswinkel, immer nur eine Auswahl bestimmter Oberflächenelemente dieser Gruppe das einfallende Licht in die Richtung des Beobachters beugt. Diese ausgewählten Oberflächenelemente liegen vorzugsweise in enger Nachbarschaft zueinander, so dass der Beobachter an der betreffenden Stelle einen hellen Punkt wahrnimmt. Ändern nun die Lichtquelle und/ oder der Beobachter ihre Position, so werden nun andere Oberflächenelemente derselben Gruppe das einfallende Licht zum Beobachter lenken, so dass der helle Punkt an einer anderen Stelle sichtbar wird. Erfindungsgemäß sind die Beugungsgitter dabei so aufeinander abgestimmt, dass der Beobachter bei einer kontinuierlichen Variation der Beobachtungsbedingungen eine kontinuierliche Bewegung des hellen Punktes wahrnimmt.

Die Gesamtheit der Oberflächenelemente der Sicherheitseinrichtung besteht nun aus mehreren derartigen Gruppen, die in der beschriebenen Weise bei gegebenen Beleuchtungs- und Beobachtungsbedingungen helle Lichtpunkte an verschiedenen Positionen der, von den Oberflächenelementen bedeckten Fläche der Sicherheitseinrichtung erzeugen. Die Summe dieser hellen Lichtpunkte wird dabei von einem Beobachter als Symbol wahrgenommen, welches sich bei einer Änderung der Beobachtungsbedingungen als Ganzes über die Fläche der Sicherheitseinrichtung bewegt. Bei dem dargestellten Symbol kann es sich um ein beliebiges Symbol, insbesondere ein geometrisches Symbol, wie z. B. ein Kreis, ein Smiley, Buchstaben oder Zahlen aber auch um ein komplexes Logo sowie um Kombinationen solcher Symbole handeln. Die Bahn, der die Bewegung des dargestellten Symbols folgt, ist dabei nicht entlang einer eindimensionalen Kurve vorbestimmt, sondern ergibt sich aus dem Zusammenspiel von Beleuchtungs- und Betrachtungswinkeln, die jeweils in zwei Richtungen variieren können. Entsprechend kann auch diese Bahn prinzipiell die gesamte zweidimensionale Fläche der Sicherheitseinrichtung überdecken.

In einer einfachen Ausführung handelt es sich bei der Bewegung des Symbols um eine Verschiebung, die proportional zur Richtungsänderung des Lichts ist, welche den jeweiligen Beobachtungsbedingungen entspricht. Die Position des Symbols, die einer verschwindenden Richtungsänderung, d. h. einer direkten Reflektion oder Transmission, entspricht, erscheint dabei als Schwerpunkt, um den das Symbol bei einer entsprechenden Bewegung des Beobachters und/ oder der Lichtquelle zu kreisen scheint.

In anderen Ausführungen kann anstelle der oben genannten isotropen Proportionalität zwischen der Richtungsänderung des Lichts und der Position des Symbols eine andere funktionale Abhängigkeit gewählt werden. In einer bevorzugten Ausführung wird eine Proportionalität mit stark unterschiedlichen Proportionalitätskonstanten in zwei zueinander senkrechten Bewegungsrichtungen angewendet, so dass von einem Beobachter annäherungsweise eine Linearbewegung des Symbols wahrgenommen wird. Diese Ausführungsform ist besonders für streifenförmige Sicherheitselemente geeignet, wie sie z.B. vorteilhaft für Anwendung auf Banknoten vorgesehen werden kann.

Ebenso ist es möglich, nichtlineare funktionale Abhängigkeiten zu verwenden, so dass beispielsweise die Bewegung des Symbols einer verzerrten Bahn zu folgen scheint oder sich sogar auf gekrümmte Teilbereiche der Fläche des Sicherheitselements beschränken lässt.

Bei Abweichungen von der einfachen Proportionalität zwischen der Richtungsänderung des Lichts und der Position des Symbols entsteht für einen Beobachter im Allgemeinen der Eindruck, als ob das Symbol durch einen Zerrspiegel betrachtet würde. Dies beruht darauf, dass gemeinsam mit der Erzeugung einer komplexen Bewegungsbahn gleichzeitig auch eine Verzerrung des Symbols bewirkt wird. In bestimmten Ausführungen kann diese Verzerrung durch eine entsprechend verzerrte Gestaltung des als Vorlage verwendeten Symbols kompensiert werden. Eine andere Möglichkeit besteht darin, für die verschiedenen Punkte des dargestellten Symbols unterschiedliche Bewegungsmuster zu definieren, so dass in der Summe ein nicht verzerrtes Symbol einer verzerrten Bahn zu folgen scheint.

In einer weiteren Ausführungsform folgen unterschiedliche Punkte des Symbols unterschiedlichen Bewegungsmustern. Damit wird der Eindruck einer kontinuierlichen Veränderung des dargestellten Symbols als Funktion der Beobachtungsbedingungen erzielt, ohne dass jedoch das Symbol als Ganzes einer verzerrten Bahn folgt.

Wie einleitend erwähnt, beziehen sich die bisherigen Ausführungen auf eine einzelne Beugungsordnung. Im Allgemeinen werden durch die Gitterstrukturen mehrere Beugungsordnungen unterschiedlicher Intensität erzeugt, wobei die Intensitätsverhältnisse durch die Einzelheiten des verwendeten Gitterprofils und der verwendeten Materialien bestimmt werden. Eine vorteilhafte Ausführungsform zeigt die starke Hervorhebung einer einzigen Beugungsordnung gegenüber allen anderen Beugungsordnungen. Dies kann beispielsweise durch eine geeignete Asymmetrie der Gitterprofile erreicht werden.

In einer anderen vorteilhaften Ausführungsform werden im Wesentlichen zwei zueinander symmetrische Beugungsordnungen, insbesondere die beiden ersten Beugungsordnungen, gegenüber allen anderen Beugungsordnungen hervorgehoben. Die hierzu notwendige Unterdrückung höherer Beugungsordnungen kann beispielsweise durch die geeignete Ausführung des Gitterprofils erreicht werden.

Betrachtet man nun eine einzelne der Gruppen von Oberflächenelementen unter gegebenen Beobachtungsbedingungen, so wird für jede der sichtbaren Beugungsordnungen die Bedingung, dass das Licht in die Richtung des Beobachters abgelenkt wird, an einer anderen Position in der Fläche der Sicherheitseinrichtung erfüllt. Entsprechend werden mehrere Exemplare des dargestellten Symbols an unterschiedlichen Positionen dargestellt. In dem genannten Fall, dass der visuelle Gesamteindruck im Wesentlichen durch die beiden ersten Beugungsordnungen erzeugt wird, werden also insbesondere zwei Exemplare des Symbols sichtbar werden. Unter der Voraussetzung, dass die funktionale Abhängigkeit zwischen der Richtungsänderung des Lichts und der Position des Symbols symmetrisch bezüglich eines Schwerpunkts ist, beschreiben die beiden Exemplare bei einer Änderung der Beobachtungsbedingungen zueinander gegenläufige Bahnen in Bezug auf diesen Schwerpunkt.

Ausgehend von dieser allgemeinen Beschreibung der Wirkungsweise der Sicherheitseinrichtung lassen sich nun verschiedene Varianten realisieren, von denen einige vorteilhafte Ausführungsformen im Folgenden beschrieben werden. Diese Varianten sind miteinander in naheliegender Weise kombinierbar, ohne dass auf jede dieser Kombinationsmöglichkeiten näher eingegangen ist.

In einer ersten Ausführungsform wird die Fläche des Sicherheitselementes in mehrere Teilflächen unterteilt, in denen unterschiedliche Symbole dargestellt werden. Dabei werden die Schwerpunkte der in den verschiedenen Teilbereichen dargestellten Symbole so gewählt, dass sie miteinander übereinstimmen. Somit entsteht für den Beobachter der Eindruck, dass die Symbole im Grenzbereich der Teilflächen ineinander übergehen. Dieser Grenzbereich kann sowohl als scharfe Linie wie auch als diffuser Übergangsbereich ausgestaltet sein. In einem Sonderfall dieser Ausführung können benachbarte Teilflächen nur leicht veränderte Formen eines einzigen Ausgangssymbols aufweisen. Dadurch entsteht für den Beobachter der Eindruck einer schrittweisen Veränderung des Ausgangssymbols während dessen kontinuierlicher Bewegung entlang der Bahnkurve.

Eine weitere Ausführungsform beinhaltet die Darstellung von mehreren Symbolen mit verschiedenen (mindestens zwei) Schwerpunkten. Dies kann entweder durch die Unterteilung der Fläche in mehrere Teilflächen, welche jeweils die Informationen eines bestimmten Symbols und dessen Schwerpunkt enthalten, oder auch durch die diffuse Anordnung der jeweiligen Oberflächenelementen-Gruppen erfolgen. Hierbei entsteht für den Beobachter, insbesondere für die nachgenannte Anordnungsform, der Eindruck sich in Ihrer Bewegung durchdringender Symbole. Durch die Positionierung der Schwerpunkte im Grenzbereich der mit den Oberflächenelementen bedeckten Fläche oder gerade außerhalb der mit den Oberflächenelementen bedeckten Fläche kann eine der beiden, ersten Beugungsordnungen maximal über den gesamten Winkelbereich ausgeblendet werden.

Eine weitere Ausführungsform ergibt sich dadurch, dass selektiv mehrere benachbarte Oberflächenelemente zu einem vereinigten Oberflächenelement zusammengefasst werden. Diesem vereinigten Oberflächenelement werden Gitterkonstante und Orientierung von z.B. nur einem der zusammengefassten Oberflächenelemente zugeordnet. Hierdurch werden einzelne Punkte des Symbols unter speziellen Winkelkombinationen hervorgehoben, was bei der Bewegung des Symbols beim Beobachter zu einem funkelnden Eindruck führt. Vorteilhaft werden 0,1% bis 50% der Oberflächenelemente in dieser Form zusammengefasst.

In einer weiteren Ausführungsform wird die erfindungsgemäße Sicherheitseinrichtung um eine zusätzliche lichtbrechende Schicht, wie z.B. ein Mikroprismen-Array, Mikrolinsen-Array oder sonstige lichtbrechende Elemente, ergänzt. Unter Verwendung geeigneter lichtbrechender Elemente ergibt sich beispielsweise für den Beobachter eine Vervielfältigung der erzeugten Symbole, welche sich in jeweiligen Gruppen um den, zuvor in der Sicherheitseinrichtung festgelegten Schwerpunkt, bzw. um die festgelegten Schwerpunkte bewegen.

Gemäß einem weiteren Aspekt der Erfindung ist das angezeigte Symbol innerhalb eines weiten Blickwinkelbereichs sichtbar von insbesondere mehr als 60° und besonders vorteilhaft mehr als 90°.. Dies erfordert einen großen Variationsbereich in der Ausführung der Oberflächenstrukturen, insbesondere kann die Orientierung der Oberflächenstrukturen jeden beliebigen Winkel in der Trägerelementfläche annehmen. Ebenso ist eine große Variation der Gitterkonstante notwendig, insbesondere hierfür ist die gleichzeitige Verwendung von sehr kleinen und großen Gitterkonstanten erforderlich. Vorteilhaft liegt der Bereich der gleichzeitig angewendeten Gitterkonstanten zwischen ≤ 500nm (≥ 2000 Linien/mm) und ≥ 1500nm (≤ 666 Linien/mm), besonders vorteilhaft zwischen ≤ 300nm (≥ 3333 Linien/mm) und ≥ 5000nm (≤ 200 Linien/mm). Vorteilhaft ist es, das Größenverhältnis der größten zu der kleinsten Gitterkonstanten an den Oberflächenstrukturen in einem Verhältnis von mindestens 3:1 und besonders vorteilhaft mindestens 10:1 auszugestalten.

Des Weiteren ist es vorteilhaft, dass die Oberflächenelemente derart ausgebildet sind, dass das Symbol jeweils von weniger als 10%, insbesondere weniger als 5% der auf dem Trägerelement vorgesehenen Oberflächenelemente erzeugt wird.

Vorteilhafterweise ist die auf dem Trägerelement strukturierte Fläche zu mindestens 10%, insbesondere mindestens 30% und besonders vorteilhaft mindestens 50% mit Oberflächenelementen bedeckt. Durch derartige Füllfaktoren der Fläche mit Oberflächenelementen kann ein gut sichtbares Symbol mit einer ausreichenden Helligkeit erzeugt werden, so dass das Symbol insbesondere vom menschlichen Auge ohne Hilfsmittel erkannt werden kann.

Die Sicherheitseinrichtung gemäß Aspekten der Erfindung kann transparent, reflektiv oder auch semi-reflektiv, d.h. halbdurchlässig für Licht, ausgeführt werden. Die transparente Ausführung kommt insbesondere dann zur Anwendung, wenn die Sicherheitsprüfung des zu schützenden Artikels mittels Durchsicht erfolgen soll und der Artikel selbst zumindest teilweise lichtdurchlässig ist.

Eine oder mehrere Seiten der Sicherheitseinrichtung gemäß Aspekten der Erfindung können derart ausgeführt sein, dass sie auftreffendes Licht reflektieren. Hierzu kann beispielsweise das Trägerelement an einer Unterseite und/ oder einer Oberseite und/ oder die Oberflächenelemente eine lichtreflektierende Schicht aufweisen. Beispielsweise kann es sich hierbei jeweils um eine Schicht aus einem Metall, wie bspw. Aluminium, Silber, Kupfer, Gold oder Chrom handeln. Selbstverständlich sind auch Metalllegierungen und/ oder Kombinationen unterschiedlicher Metalle geeignet. Auch sind reflektierende Dünnschichtelemente geeignet, wie sie beispielsweise durch dielektrische oder cholesterische Schichten bereitgestellt werden. Besonders geeignet ist das Vorsehen einer Aluminiumschicht. Insbesondere bei Ausführung mit lichtreflektierenden Schichten an mindestens zwei Seiten ist es vorteilhaft, dass mindestens eine dieser Schichten halbdurchlässig ausgeführt ist. Das Vorsehen reflektierender Schichten ist insbesondere vom Anwendungsfall der Sicherheitseinrichtung abhängig. So sind Reflektionsschichten als Bestandteil der Sicherheitseinrichtung insbesondere dann nützlich, wenn die Sicherheitsprüfung des zu schützenden Artikels mittels Aufsicht erfolgen soll und auftreffendes Licht durch diesen Artikel selbst nicht oder ungenügend reflektiert wird.

Zur Herstellung der Oberflächenelemente ist es möglich auf dem Trägerelement einen härtbaren, d.h. beispielsweise chemisch vernetzbaren Lack aufzubringen und die einzelnen Oberflächenelemente, insbesondere die Oberflächenstruktur der Oberflächenelemente über ein Abformelement herzustellen. Anschließend erfolgt ein Aushärten des Lackes, vorteilhafterweise mittels UV-Licht und/ oder durch Wärmeeinwirkung. Die gehärtete Lackschicht hat nach dem Abformen der Oberflächenelemente vorteilhaft eine Dicke von 0,5 bis 300 µm, besonders vorteilhaft 0,8 bis 50 µm und insbesondere 1 bis 10 µm. Vorteilhaft weist das Trägerelement und/ oder die Oberflächenelemente einen Polymerwerkstoff auf oder ist aus Polymer hergestellt.

Die Herstellung der Oberflächenelemente kann derart erfolgen, dass das Trägerelement aus einem thermoplastischen Material besteht bzw. thermoplastisches Material aufweist und die Strukturierung der einzelnen Oberflächenelemente von einem Abformelement auf das thermoplastische Material übertragen wird. Insbesondere kann dies mittels Prägeverfahren, vorteilhaft unter Anwendung von Druck und/ oder Wärme erfolgen.

Zur Erzeugung der die Sicherheitseinrichtung ausbildenden diffraktiven Oberflächenelemente werden zunächst insbesondere mit Hilfe von Datenverarbeitungsprogrammen Informationen zur Ausgestaltung dreidimensionaler Oberflächenstrukturen auf einer Vielzahl von Oberflächenelementen generiert. Dies erfolgt dadurch, dass, wie vorstehend anhand der Sicherheitseinrichtung beschrieben, Oberflächenelementen-Gruppen aus mehreren Oberflächenelementen gebildet werden und die Oberflächenstrukturen und die Ausrichtung der Oberflächenelementen-Gruppen derart aufeinander abgestimmt werden , dass unter gegebenen Beobachtungsbedingungen ein Punkt des darzustellenden Symbols an der vorgesehenen Position zu sehen ist. Ferner werden weiter Informationen generiert, durch die mehrere Oberflächenelementen-Gruppen derart eingerichtet werden, dass sie jeweils einen Punkt darstellen, sodass sich das darzustellende Symbol aus der Summe aller von den Oberflächenelementen-Gruppen dargestellten Punkte zusammensetzt. Die Vielzahl an diffraktiven Oberflächenelementen mit dreidimensionalen Oberflächenstrukturen wird zur Herstellung der Sicherheitseinrichtung auf einem Trägerelement auf Basis der generierten Informationen angeordnet.

Besonders vorteilhaft ist es, die erfindungsgemäße Sicherheitseinrichtung auf oder in Zahlungsmitteln, wie Banknoten, Schecks, Kreditkarten und dergleichen vorzusehen. Auch andere Hochsicherheitsdokumente wie Reisepässe, Personalausweise, Führerscheine, Sozialversicherungskarten etc. können zur einfachen Überprüfung, ob es sich um einen originalen Artikel oder eine Fälschung handelt, mit der Sicherheitseinrichtung gemäß Aspekten der Erfindung ausgerüstet sein. Diese weist insbesondere den Vorteil auf, dass sie von einem Beobachter ohne die Zuhilfenahme von besonderen Leseeinrichtungen oder anderen Hilfsmittel sichtbar ist.

Auch auf Dokumenten, wie Anteilsscheinen, Steuerbanderolen, Urkunden, Eintrittskarten, Passierscheinen etc., ist das Vorsehen einer Sicherheitseinrichtung gemäß Aspekten der Erfindung vorteilhaft. Dies gilt insbesondere auch für Produkte und Marken, wie Medikamente, Spirituosen, Tabakwaren, Ersatzteile, Luxusgüter etc.

Die erfindungsgemäße Sicherheitseinrichtung kann maschinenlesbar ausgeführt werden. Maschinenlesbarkeit kann vorteilhaft auch dadurch ermöglicht oder vereinfacht werden, dass die erfindungsgemäße Sicherheitseinrichtung beispielsweise mit derartigen Sicherheitsmerkmalen und/ oder Stoffklassen kombiniert wird, die insbesondere diffraktive, refraktive, reflektive, polarisierende, phasenschiebende, elektrisch leitfähige, magnetische, farbige, fluoreszierende, phosphoreszierende und/ oder sonstige lumineszierende Eigenschaften aufweisen. Auch sind Kombinationen der erfindungsgemäßen Sicherheitseinrichtung mit elektronischen Komponenten, wie beispielsweise RFID-Chips, gedruckter Elektronik und dergleichen, zur Ermöglichung bzw. Verbesserung der Maschinenlesbarkeit vorteilhaft.

Des Weiteren ist die Kombination mit einem oder mehreren weiteren Sicherheitsmerkmalen möglich, beispielsweise mit einem Hologramm. Eine Kombination kann entweder - dem Stand der Technik entsprechend - durch Rekombination einzelner eigenständiger Sicherheitseinrichtungen oder - gemäß einem Aspekt dieser Erfindung - gemeinsam mit der Herstellung der erfindungsgemäßen Sicherheitseinrichtung geschehen. Hierbei kann die Anordnung einzelner eigenständiger Sicherheitsmerkmale beispielsweise in räumlicher Trennung zueinander und/ oder in Form einer diffusen Überlagerung mehrerer Sicherheitsmerkmale erfolgen. Des Weiteren ist auch die Kombination der erfindungsgemäßen Sicherheitseinrichtung mit refraktiven Elementen, wie z.B. Linsen, Prismen, und dergleichen möglich. Auch sind andere, nahezu beliebige Kombinationen mit weiteren lichtbeeinflussenden Schichten oder Materialien möglich, wie sie beispielsweise in Form von Farbstoffen und/ oder Pigmenten, und/ oder optischen Filterelementen und/ oder sogenannten "optischen Markern" bekannt sind.

In einer Ausführungsform der Erfindung werden mehrere, bevorzugt zwei Symbole bevorzugt ähnlicher Lichtintensität von einem Beobachter derart wahrgenommen, dass ihr Bewegungsmuster entgegengesetzt ist und sie sich umso mehr aufeinander zu bewegen, je kleiner der Ablenkwinkel wird, wobei vorteilhaft für den Beobachter der Eindruck entsteht, dass sich die aufeinander zu bewegenden Symbole unter einem bestimmten Ablenkwinkel gegenseitig durchdringen.

In einer weiteren Ausführungsform der Erfindung ist für einen Beobachter nur ein Symbol sichtbar und/ oder in seiner Lichtintensität besonders hervorgehoben ist.

In einer weiteren Ausführungsform der Erfindung erfolgt die Darstellung eines Symbols oder mehrerer, vorteilhaft verschiedener Symbole derart, dass das Symbol bzw. die Symbole vom Beobachter optisch verzerrt wahrgenommen werden, insbesondere derart, dass die Verzerrung als Vergrößerung oder Verkleinerung des Symbols wahrgenommen wird, wenn sich der Beobachtungswinkel oder der Lichteinfallswinkel ändert.

In noch einer weiteren Ausführungsform der Erfindung erfolgt die Darstellung eines Symbols oder mehrerer, vorteilhaft verschiedener Symbole derart, dass vorteilhaft 0,1% bis 50%, bevorzugt 1% bis 10% benachbarter Oberflächenelemente zu einem vereinigten Oberflächenelement derart zusammengefasst werden, dass einzelne, das Symbol bzw. die Symbole darstellende Punkte unter bestimmten Winkelkombinationen eine überdurchschnittlich hohe Lichtintensität aufweisen, sodass von dem Beobachter ein funkelnder Effekt wahrgenommen wird.

In einer weiteren Ausführungsform der Erfindung ist die Sicherheitseinrichtung maschinenlesbar ausgeführt.

In einer weiteren Ausführungsform der Erfindung ist die Sicherheitseinrichtung diese mit einem refraktiven Element, vorteilhaft mit einer Anordnung von Mikroprismen oder Mikrolinsen derart kombiniert, dass von einem Beobachter die Kombination optischer Merkmale wahrgenommen wird, wie beispielsweise eine Vervielfältigung des/der, von der Sicherheitseinrichtung gemäß der vorangehenden Beschreibung dargestellten Symbols/Symbole, wobei sich diese jeweils in Gruppen um den, durch die Sicherheitseinrichtung festgelegten Schwerpunkt bzw. um die festgelegten Schwerpunkte bewegen, wenn sich der Beobachtungswinkel oder der Lichteinfallswinkel ändert.

In einer weiteren Ausführungsform der Erfindung sind die Oberflächenelemente mit einer Schutzschicht versehen, wobei die Schutzschicht, für den Fall, dass die Oberflächenelemente nicht mit einer Reflektionsschicht ausgestattet sind, einen Brechungsindex aufweist, der sich vom Brechungsindex des Materials der Oberflächenelemente vorteilshaft um mindestens 0,03 Einheiten, bevorzugt um mindestens 0,10 unterscheidet.

Nachfolgend wird die Erfindung anhand einer bevorzugten Ausführungsform unter Bezugnahme auf die anliegenden Zeichnungen näher erläutert.

Es zeigen:
- Fig. 1: eine schematische Seitenansicht eines Ausschnitts einer Ausführungsform einer erfindungsgemäßen Sicherheitseinrichtung,
- Fig. 2: eine schematische Seitenansicht eines Ausschnitts einer weiteren Ausführungsform einer erfindungsgemäßen Sicherheitseinrichtung,
- Fig. 3: eine schematische Draufsicht einer Prinzipskizze der erfindungsgemäßen Sicherheitseinrichtung,
- Fig. 4: eine schematische Draufsicht einer Prinzipskizze einer erfindungsgemäßen Sicherheitseinrichtung, wobei zur Verdeutlichung Oberflächenelementen-Gruppen durch Ziffern bezeichnet sind,
- Fig. 5: eine schematische perspektivische Prinzipskizze einer erfindungsgemäßen Sicherheitseinrichtung,
- Fig. 5a: eine schematische Darstellung einer einzelnen Gruppe von Oberflächenelementen auf einem Sicherheitselement,
- Fig. 6: eine schematische Darstellung der vom Beobachter wahrgenommenen Symbole bei unterschiedlichen Winkeln,
- Fig. 7: eine schematische Darstellung der vom Beobachter wahrgenommenen Sicherheitseinrichtung mit zwei räumlich getrennten Symbolen bei unterschiedlichen Winkeln,
- Fig. 8: eine schematische Darstellung der vom Beobachter wahrgenommenen Sicherheitseinrichtung mit der Kombination zweier Symbole, die sich um unterschiedliche Schwerpunkte bewegen, bei unterschiedlichen Winkeln,
- Fig. 9: eine schematische Darstellung der vom Beobachter wahrgenommenen Sicherheitseinrichtung mit der Kombination zweier Symbole, deren Bewegungsbahn annähernd einer geraden Linie folgt, bei unterschiedlichen Winkeln, und
- Fig. 10: eine schematische Darstellung der vom Beobachter wahrgenommenen Sicherheitseinrichtung mit der Kombination zweier Symbole, deren Bewegungsbahn einer gekrümmten Linie folgt, bei unterschiedlichen Winkeln.

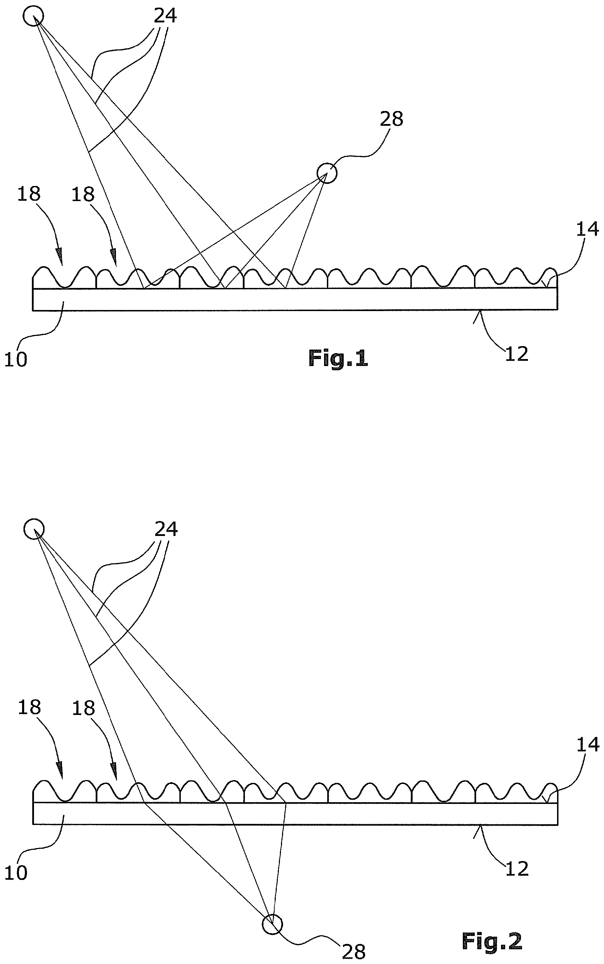

Die erfindungsgemäße Sicherheitseinrichtung weist im ersten dargestellten Ausführungsbeispiel (Fig. 1) ein reflektives Trägerelement 10 auf, bei dem es sich beispielsweise um eine Metallfolie oder ein Trägerelement aus beispielsweise Polymer, Papier und dgl. mit einer aufgebrachten Metallschicht, beispielsweise aus aufgedampftem Aluminium handelt. Das reflektive Trägerelement 10 ist beispielsweise mit einer Unterseite 12 auf einem zu sichernden Produkt, wie einer Kreditkarte, einem Geldschein oder dergleichen angeordnet. Ist das zu sichernde Produkt ganz oder teilweise transparent, ist eine weitere Ausführung des reflektiven Trägerelements 10 beispielsweise derart, dass es mit einer Oberseite 14 zur Produktseite hin angeordnet ist. An einer Oberfläche 14 des reflektiven Trägerelements 10 ist eine Vielzahl von diffraktiven Oberflächenelementen 18 angeordnet. Die einzelnen Oberflächenelemente 18 sind als Beugungsgitter ausgebildet. Die einzelnen Oberflächenelemente können beispielsweise in einem Prozessschritt hergestellt werden, indem ein Lack auf die Oberfläche 14 eines Trägerelements 10 aufgetragen und über ein Abformelement strukturiert wird. Hierbei wird vorteilhaft ein Lack verwendet, der durch UV-Strahlung oder Wärmeeinwirkung aushärtbar ist. Hierbei weist die ausgehärtete Lackschicht nach dem Ausformen der Oberflächenelemente 18 vorteilhaft eine Dicke von 0,8 - 50 µm auf. Des Weiteren können die einzelnen Oberflächenelemente beispielsweise in einem Prozessschritt hergestellt werden, indem das reflektive Trägerelement 10 aus einem thermoplastischen Trägerelement besteht, in das die Oberflächenelemente 18 über ein Abformelement beispielsweise mittels Heißprägeverfahren direkt strukturiert werden. In letztgenanntem Fall bestünde, anders als in Fig.1 schematisch dargestellt, nicht zwangsläufig eine Grenzfläche 14 zwischen dem reflektiven Trägerelement 10 und den Oberflächenelementen 18.

Einfallende Lichtstrahlen 24 werden, nachdem ggf. beim Eintreten in die Lackschicht bzw. das thermoplastische Trägerelement bereits eine Beugung erfolgte, an der Oberfläche 14 des reflektiven Trägerelements 10 reflektiert. Beim Austreten aus den Oberflächenelementen werden die Lichtstrahlen durch das an der Außenfläche der einzelnen vorgesehenen Beugungsgitter in verschiedene Richtungen gebeugt. Oberflächenelemente die derselben Oberflächenelementen-Gruppe angehören und in enger Nachbarschaft zueinander liegen, beugen die Lichtstrahlen derart dass sie sich in einem gemeinsamen Punkt 28 näherungsweise treffen. Über die gesamte Fläche der Sicherheitseinrichtung gesehen kann sich die Position dieses Punktes auch bei unverändertem Einfallswinkel in stetiger Weise derart ändern, dass eine große Vielzahl von Bewegungsmustern möglich ist. Die als Linien dargestellten Strahlen sind vereinfacht dargestellt, sodass lediglich die Reflektion an der Oberfläche 14 und nicht die in bzw. an den Oberflächenelementen 18 auftretende Beugung dargestellt ist.

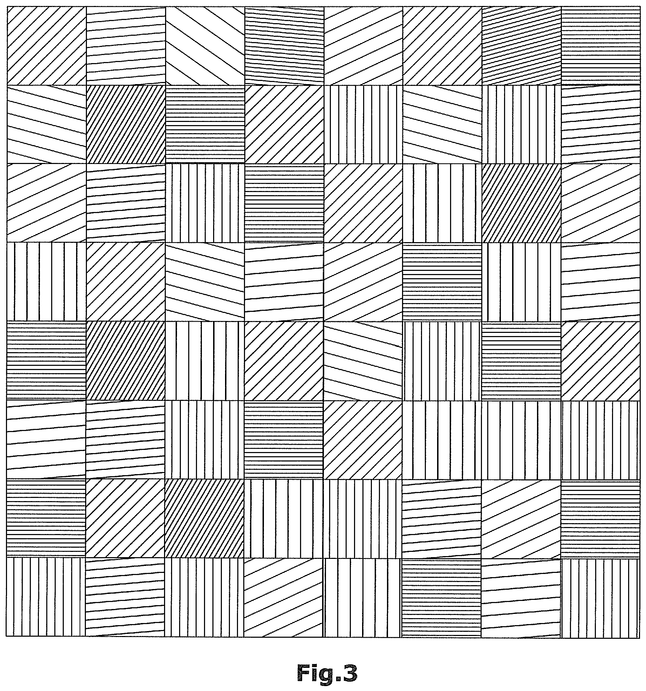

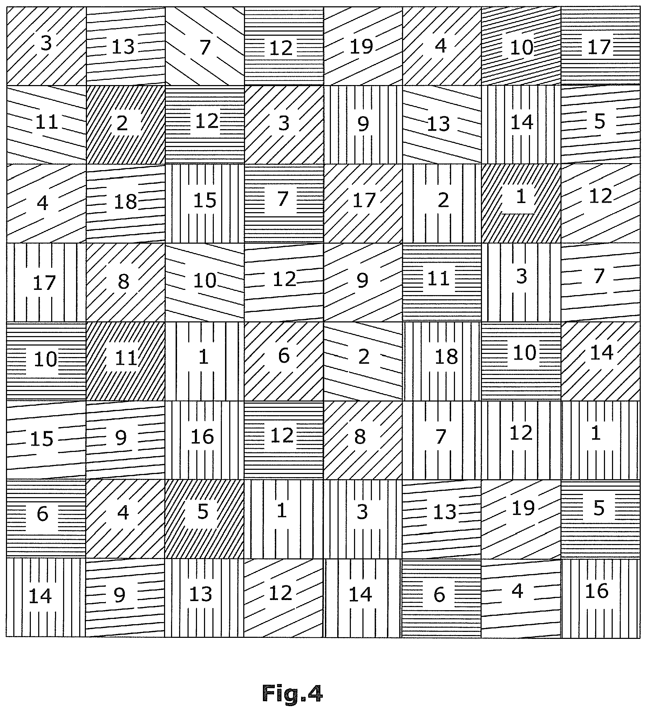

Wie nachstehend insbesondere anhand der Figuren 3 und 4 erläutert, erfolgt durch eine Gruppe mehrerer einzelner Oberflächenelemente 18 die Darstellung eines Punktes 28. Die Darstellung des sich bewegenden Punkts 28 erfolgt aufgrund der Änderung des Lichteinfalls- und/ oder Beobachtungswinkels stets durch dieselbe Oberflächenelementen-Gruppe. Die Darstellung eines Symbols erfolgt somit durch Darstellung mehrerer Punkte, sodass auf dem Trägerelement 10 mehrere Oberflächenelementen-Gruppen entsprechend der Anzahl der darzustellenden Punkte des Symbols angeordnet sind.

Anstelle des Vorsehens einer reflektiv ausgeführten Sicherheitseinrichtung kann diese auch mittels eines transparenten Trägerelementes durchsichtig ausgeführt sein (Fig. 2). Die Strahlen 24 treten somit durch die Oberflächenelemente 18 und das Trägerelement 10 hindurch, wobei, wie anhand von Fig. 1 erläutert, durch die Gruppe an Oberflächenelementen 18 ein Punkt 28 im Raum dargestellt wird.

Die einzelnen Oberflächenelemente 18 weisen Beugungsgitter auf, wobei diese in den Figuren 1 und 2 nur schematisch dargestellt sind.

In diesem Ausführungsbeispiel der Erfindung weist die Sicherheitseinrichtung auf einem reflektierenden oder transparenten Trägerelement eine Vielzahl von Oberflächenelementen 18 auf. Die einzelnen Oberflächenelementen-Gruppen sind aus mehreren Oberflächenelementen 18 zusammengesetzt, die unregelmäßig auf dem Trägerelement verteilt sind. In den Figuren 3 und 4 ist die Zusammensetzung der Oberflächenelementen-Gruppe als Beispiel dargestellt. Aus Fig. 3 ergibt sich ein Beispiel einer schematischen Draufsicht einer Vielzahl als Quadrate dargestellter Oberflächenelemente, in welchen schematisch unterschiedliche Gitterstrukturen durch Linien dargestellt sind. Die einzelnen Oberflächenelemente weisen Gitterstrukturen mit Gitterkonstanten im Bereich von 500 nm bis ≥ 1500 nm, besonders bevorzugt von ≤ 300 nm bis ≥ 5000 nm auf. In Fig. 3 weisen einige Oberflächenelemente identische Strukturen auf. Aus Fig. 4 ergibt sich sodann ein Beispiel, welche Oberflächenelemente 18 zu Oberflächenelementen-Gruppen zusammengefasst sind. Zur Veranschaulichung sind in Fig. 4 einzelne Gruppen durch Zahlen 1, 2, 3, ... gekennzeichnet. In jedem mit einer Ziffer versehenen Quadrat ist hierbei ein Oberflächenelement 18 angeordnet. Die einzelnen Oberflächenelemente 18 einer Oberflächenelementen-Gruppe weisen insbesondere Oberflächenelemente 18 mit unterschiedlichen Oberflächenstrukturen auf (Fig. 3). Die Oberflächenstruktur variiert insbesondere in ihrer Orientierung bzw. Ausrichtung. Ferner variiert die Oberflächenstruktur in der Höhe bzw. Amplitude der einzelnen Gitter sowie deren Periode.

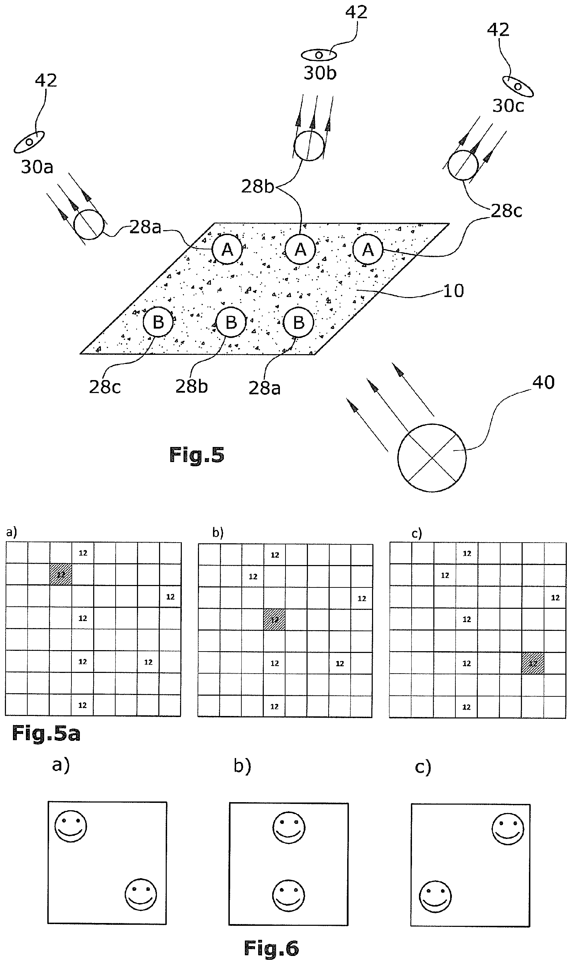

In Fig. 5 ist prinzipiell eine Ausgestaltung einer erfindungsgemäßen Sicherheitseinrichtung dargestellt. Das Trägerelement 10 ist mit einer Vielzahl einzelner Oberflächenelemente 18 versehen, die als unterschiedlich ausgestaltete Punkte dargestellt sind. Einzelne der hier dargestellten Oberflächenelemente sind, wie beispielsweise anhand Fig. 4 ersichtlich, jeweils zu Gruppen zusammengefasst. Durch eine Lichtquelle 40 wird Licht auf eine Rückseite des in diesem Ausführungsbeispiel transparenten Trägerelements 10 geworfen. Zur Überprüfung des Sicherheitselements bzw. um ein Bewegen des Symbols zu erkennen, bewegt sich in diesem Ausführungsbeispiel ein Beobachter 42 aus einer Position 30a in eine Position 30b und aus dieser in eine Position 30c. Die Anzahl und Anordnung der Oberflächenelemente ist so gewählt, dass, wie durch die Linie 32 dargestellt, bei einem kontinuierlichen Ändern des Beobachtungswinkels sich das aus Punkten 28 zusammengesetzte Symbol kontinuierlich bewegt.. Hierbei ändert sich der Beobachtungswinkel in dem dargestellten Ausführungsbeispiel von dem Beobachtungswinkel 30a über den Beobachtungswinkel 30b zu dem Beobachtungswinkel 30c. Entsprechendes gilt für die Fälle, dass sich der Lichteinfallswinkel kontinuierlich ändert oder dass sich Lichteinfalls- und Beobachtungswinkel gleichzeitig kontinuierlich ändern. Eine gleichzeitige Änderung des Lichteinfalls- und Beobachtungswinkels erfolgt bspw. dann, wenn das Sicherheitselement bzw. das Trägerelement 10 bewegt wird.

In Fig. 5a ist beispielhaft die schematische Darstellung einer einzelnen Gruppe von Oberflächenelementen auf dem Sicherheitselement dargestellt. In Anlehnung an Fig. 4 wurde hierfür beispielhaft die aus sieben Oberflächenelementen bestehende Gruppe "12" ausgewählt. Die Oberflächenelemente sind dabei weiterhin vorzugsweise unregelmäßig auf dem Trägerelement angeordnet und können auch alle unter Anpassung der jeweiligen Parameter (Gitterperiode und Gittervektor) mit anderen, insbesondere auch zu anderen Gruppen gehörenden Oberflächenelementen auf dem Trägerelement die Position tauschen. Zur Darstellung werden die Oberflächenelemente in einer Matrix-Form aufgeführt, wobei in den drei abgebildeten Matrizen jeweils dieselben Oberflächenelemente dargestellt sind. Die drei Matrizen zeigen die Wirkung einer Veränderung der Position eines Beobachters, beispielsweise entsprechend den Beobachtungspositionen 30a, 30b und 30c gemäß Fig. 5, wobei die, für den Beobachter unter dem jeweiligen Beobachtungswinkel sichtbaren Oberflächenelemente, schraffiert dargestellt sind. Es liefert immer eine Teilmenge der gesamten Oberflächenelemente einer Gruppe einen Beitrag zum dargestellten Punkt. Somit tragen bei einem bestimmten Beobachtungswinkel nicht alle Oberflächenelemente einer bestimmten Gruppe zur Darstellung eines Punktes bei. Ändert sich die Position des Beobachters und damit der Beobachtungswinkel, ändern sich die zur Darstellung beitragenden Oberflächenelemente. Dabei wird der dargestellte Punkt jedoch weiterhin von Oberflächenelementen derselben Gruppe dargestellt. Bei Veränderung des Beobachtungswinkels wird der Punkt also durch teilweise andere oder vollständig andere Oberflächenelemente derselben Oberflächenelementen-Gruppe dargestellt.

In Fig. 6 ist in vereinfachter Darstellung veranschaulicht wie sich ein Symbol für den Beobachter bewegen kann. Bei einem Beobachtungswinkel 30a erkennt der Beobachter zwei hier als Smileys dargestellte Symbole. Hierbei wird bspw. das Symbol in der linken oberen Ecke durch die Beugung + 1. Ordnung und das Symbol in der rechten unteren Ecke durch die - 1. Ordnung erzeugt. Bewegt sich der Beobachter in die Position 30b (Fig. 5), so bewegt sich das Symbol aus der oberen linken Ecke nach rechts in die Mitte und das Symbol aus der unteren rechten Ecke nach links in die Mitte. In der Position 30c bewegt sich das obere Symbol weiter nach rechts in die obere rechte Ecke und das untere Symbol weiter nach links in die linke Ecke. Der Beobachter sieht somit eine kontinuierliche Bewegung der beiden Symbole.

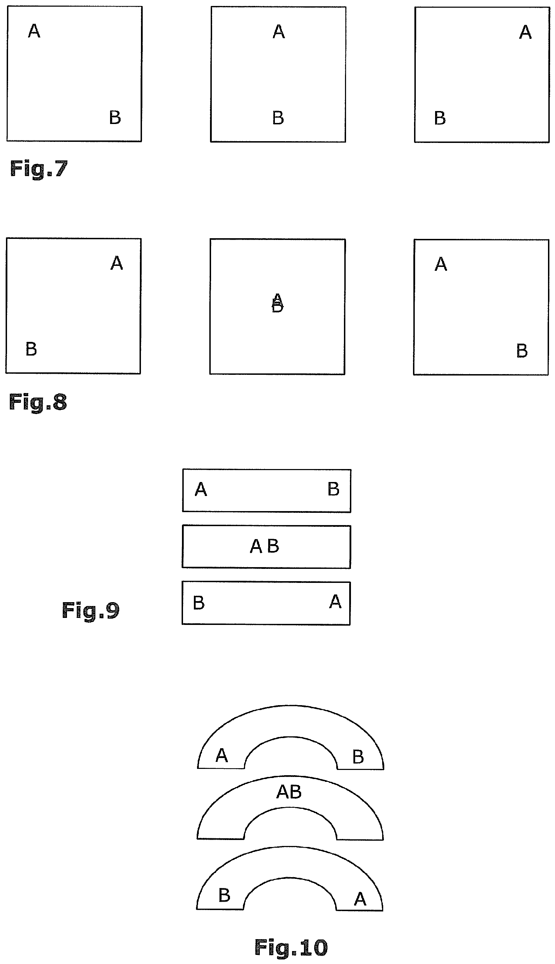

In Fig. 7 ist in vereinfachter Darstellung veranschaulicht wie sich ein Symbol für den Beobachter bewegen kann. Bei einem Beobachtungswinkel 30a erkennt der Beobachter zwei unterschiedliche Symbole, die in unterschiedlichen Teilbereichen (obere/ untere Hälfte) der Sicherheitseinrichtung definiert sind. Hierbei wird bspw. ein Symbol (A) in der linken oberen Ecke durch die Beugung + 1. Ordnung und das andere Symbol (B) in der rechten unteren Ecke durch die - 1. Ordnung erzeugt. Bewegt sich der Beobachter in die Position 30b (Fig. 5), so bewegt sich ein Symbol (A) aus der oberen linken Ecke nach rechts in die Mitte und das andere Symbol (B) aus der unteren rechten Ecke nach links in die Mitte. In der Position 30c bewegt sich das obere Symbol (A) weiter nach rechts in die obere rechte Ecke und das untere Symbol (B) weiter nach links in die linke Ecke. Der Beobachter sieht somit eine kontinuierliche Bewegung der beiden Symbole.

In Fig. 8 ist in vereinfachter Darstellung veranschaulicht wie sich ein Symbol für den Beobachter bewegen kann. Bei einem Beobachtungswinkel 30a erkennt der Beobachter zwei unterschiedliche Symbole, welche sich jeweils um unterschiedliche Schwerpunkte, am oberen Rand (A) und am unteren Rand (B), bewegen. Hierbei wird bspw. das Symbol in der linken oberen Ecke durch die Beugung - 1. Ordnung und das Symbol in der rechten unteren Ecke durch die + 1. Ordnung erzeugt. Bewegt sich der Beobachter in die Position 30b (Fig. 5), so bewegt sich das Symbol aus der oberen linken Ecke nach rechts in die Mitte und das Symbol aus der unteren rechten Ecke nach links in die Mitte. In der Position 30c bewegt sich das obere Symbol weiter nach rechts in die obere rechte Ecke und das untere Symbol weiter nach links in die linke Ecke. Der Beobachter sieht somit eine kontinuierliche Bewegung der beiden Symbole.

In Fig. 9 ist in vereinfachter Darstellung veranschaulicht wie sich zwei Symbole für den Beobachter bewegen können. Bei einem Beobachtungswinkel 30a erkennt der Beobachter zwei unterschiedliche Symbole, welche sich entlang einer annähernd linearen Bahn bewegen. Hierbei wird bspw. das Symbol(A) an der linken Seite durch die Beugung + 1. Ordnung und das Symbol (B) an der rechten Seite durch die - 1. Ordnung erzeugt. Bewegt sich der Beobachter in die Position 30b (Fig. 5), so bewegt sich das Symbol (A) von der linken Seite in die Mitte und das Symbol (B) von der rechten Seite in die Mitte. In der Position 30c bewegt sich das Symbol (A) weiter nach rechts an die rechte Seite und das Symbol (B) weiter nach links an die linke Seite. Der Beobachter sieht somit eine kontinuierliche Bewegung der beiden Symbole.

In Fig. 10 ist in vereinfachter Darstellung veranschaulicht wie sich zwei Symbole für den Beobachter bewegen können. Die Bewegung entspricht hierbei einer Bewegung analog der in Fig. 9 beschriebenen, jedoch auf einer gekrümmten Bahn.

## Patentansprüche

1. Sicherheitseinrichtung zur Verbesserung der Fälschungssicherheit, von Originalartikeln durch Vorsehen eines Symbols, mit
einer Vielzahl von auf einem Trägerelement (10) angeordneten diffraktiven Oberflächenelementen (18),
wobei die von den Oberflächenelementen (18) bedeckte Fläche auf einem Trägerelement (10) einen beliebig geformten Teilbereich des Trägerelementes einnehmen kann,
wobei jedes einzelne Oberflächenelement (18) eine dreidimensionale Oberflächenstruktur aufweist,
wobei mehrere Oberflächenelemente (18) eine Oberflächenelementen-Gruppe bilden, deren Oberflächenstrukturen und Ausrichtung derart aufeinander abgestimmt sind, dass sie für einen Beobachter unter gegebenen Beobachtungsbedingungen genau einen Punkt des zugehörigen darzustellenden Symbols (28) sichtbar machen,
wobei die Oberflächenstrukturen der einzelnen Oberflächenelemente der Oberflächenelementen-Gruppe derart aufeinander abgestimmt sind, dass bei beliebigen Beobachtungsbedingungen immer nur eine Auswahl bestimmter Oberflächenelemente dieser Gruppe das einfallende Licht in Richtung eines Beobachters beugt,
wobei die Oberflächenstrukturen der einzelnen Oberflächenelemente der Oberflächenelementen-Gruppe derart aufeinander abgestimmt sind, dass nach einer Änderung des Einfallswinkels des Lichtes und/oder des Beobachtungswinkels andere Oberflächenelemente derselben Oberflächenelementen-Gruppe das einfallende Licht zu dem Beobachter lenken, so dass der Punkt an einem anderen Ort sichtbar ist,
wobei mehrere Oberflächenelementen-Gruppen vorgesehen sind, die jeweils einen Punkt abbilden,
wobei sich jedes der darzustellenden Symbole (28) aus der Summe aller von zugehörigen Oberflächenelementen-Gruppen dargestellten Punkte zusammensetzt und
wobei durch die kontinuierliche Veränderung des Einfallswinkels des Lichtes und/ oder des Beobachtungswinkels eine für den Beobachter kontinuierliche Bewegung des Symbols in dem Beobachtungsraum wahrgenommen wird,
**dadurch gekennzeichnet, dass**
für einen Beobachter mehrere verschiedene Symbole (28) sichtbar sind.

2. Sicherheitseinrichtung nach Anspruch 1, **dadurch gekennzeichnet, dass** durch die gleichförmige Veränderung des Einfallswinkels des Lichtes und/ oder des Beobachtungswinkels eine für den Beobachter kontinuierliche Bewegung des Symbols (28) wahrgenommen wird, wobei diese Bewegung insbesondere einer gekrümmten Bahn (32) folgt, wobei die Krümmung der Bahn (32) vorteilhaft derart gestreckt sein kann, dass der Beobachter eine nahezu lineare Bewegung der Symbole (28) wahrnimmt.

3. Sicherheitseinrichtung nach einem der Ansprüche 1 - 2, **dadurch gekennzeichnet, dass** eine Oberfläche des Trägerelements (10) zu mindestens 10%, insbesondere zu mindestens 30% und besonders bevorzugt zu mindestens 50% mit Oberflächenelementen (18) bedeckt ist, wobei die Oberflächenelemente (18) in unregelmäßiger Anordnung auf dem Trägerelement (10) derart ausgebildet sind, dass vorzugsweise von weniger als 10%, insbesondere von weniger als 5% der Oberflächenelemente die sichtbaren Symbole (28) für die jeweilige Beobachtungsposition erzeugt wird.

4. Sicherheitseinrichtung nach einem der Ansprüche 1 - 3, **dadurch gekennzeichnet, dass** die Oberflächenelemente (18) auf ein Trägerelement (10) aufgebracht werden, in dem ein vorzugsweise strahlungshärtender Lack auf die Oberfläche (14) eines Trägerelements (10) aufgetragen, die Oberflächenelemente (18) über ein Abformelement strukturiert und danach ausgehärtet werden, wobei die ausgehärtete Lackschicht nach dem Ausformen der Oberflächenelemente (18) eine Dicke von 0,5 - 300 µm, bevorzugt 0,8 - 50 µm, besonders bevorzugt 1 - 10 µm aufweist.

5. Sicherheitseinrichtung nach einem der Ansprüche 1 - 3, **dadurch gekennzeichnet, dass** das Trägerelement (10) aus einem thermoplastischen Material besteht und /oder thermoplastisches Material aufweist, in das die Oberflächenelemente (18) über ein Abformelement, bevorzugt mittels Prägeverfahren, vorteilhaft unter Anwendung von Druck und/ oder Wärme, strukturiert werden.

6. Sicherheitseinrichtung nach einem der Ansprüche 1 - 5, **dadurch gekennzeichnet, dass** diese mindestens eine lichtreflektierende Schicht aufweist, wobei eine lichtreflektierende Schicht bevorzugt auf die Oberflächenelemente (18) oder die Unterseite (12) des Trägerelementes (10) aufgebracht ist, wobei die lichtreflektierende Schicht vorzugsweise ein Dünnschichtelement oder ein Metall, bevorzugt Aluminium, Silber, Kupfer, Gold oder Chrom aufweist.

7. Sicherheitseinrichtung nach einem der Ansprüche 1 - 6, **dadurch gekennzeichnet, dass** für einen Beobachter ein oder mehrere Symbole (28) in ihrer Lichtintensität besonders hervorgehoben sind.

8. Sicherheitseinrichtung nach einem der Ansprüche 1 - 7, **dadurch gekennzeichnet, dass** die Oberflächenstruktur der einzelnen Oberflächenelemente (18) als diffraktives Element ausgebildet ist, wobei diese vorzugsweise in ihrer Amplitude und/ oder ihrem Gitterabstand und/ oder ihrer Orientierung unterschiedlich ist, wobei die gleichzeitig, über alle Oberflächenstrukturen angewendeten Gitterkonstanten vorteilhaft zwischen ≤ 500nm und ≥ 1500nm, bevorzugt zwischen ≤ 300nm und ≥ 5000nm liegen und das Größenverhältnis der Größten zu der Kleinsten der gleichzeitig angewendeten Gitterkonstanten der Oberflächenstrukturen vorteilhaft mindestens 3:1, bevorzugt mindestens 10:1 beträgt.

9. Sicherheitseinrichtung nach einem der Ansprüche 1 - 8, **dadurch gekennzeichnet, dass** diese mit anderen Sicherheitsmerkmalen und/ oder Stoffklassen kombiniert ist, die bevorzugt diffraktive, refraktive, reflektive, polarisierende, phasenschiebende, elektrisch leitfähige, magnetische, farbige, fluoreszierende, phosphoreszierende, sonstige lumineszierende Eigenschaften und/ oder elektronische Komponenten aufweisen.

10. Sicherheitseinrichtung nach einem der Ansprüche 1 - 9, **dadurch gekennzeichnet, dass** die Sicherheitseinrichtung maschinenlesbar ausgeführt ist.

11. Sicherheitseinrichtung nach einem der Ansprüche 1 - 10, **dadurch gekennzeichnet, dass** diese mit anderen diffraktiven und/ oder refraktiven Merkmalen mittels eines gemeinsamen Abformelementes erzeugt ist, wobei die resultierende Sicherheitseinrichtung die unterschiedlichen Merkmale in räumlicher Trennung oder vorteilhaft in Form gegenseitiger Überlagerung darstellt.

12. Sicherheitseinrichtung nach einem der Ansprüche 1 - 11, **dadurch gekennzeichnet, dass** die Sicherheitseinrichtung ein Sicherheitsfaden, Aufreißfaden, Sicherheitsstreifen, Sicherheitsband, Patch oder Etikett zum Aufbringen auf ein Trägermaterial ist, wobei das Trägermaterial vorzugsweise aus Papier, Polymer und/ oder einem papierähnlichen Kompositmaterial besteht.

13. Artikel, vorteilhaft Wertdokument, wie z.B. Banknote, oder Sicherheitsdokument, wie z.B. Personaldokument, oder Original-/Markenartikel, wie z.B. Pharmazeutika, Spirituosen, Tabakerzeugnisse, technische Bauteile, Luxusgüter und dergleichen, mit einer Sicherheitseinrichtung nach einem der vorstehenden Ansprüche.

14. Verfahren zur Herstellung einer Sicherheitseinrichtung durch Vorsehen eines Symbols mit den Schritten:
Generieren digitaler Informationen zur Ausgestaltung dreidimensionaler Oberflächenstrukturen auf einer Vielzahl von Oberflächenelementen (18) durch
Bilden von Oberflächenelementen-Gruppen aus mehreren Oberflächenelementen (18),
aufeinander Abstimmen der Oberflächenstrukturen und Ausrichtung der Oberflächenelemente einer Oberflächenelementen-Gruppe derart, dass sie innerhalb eines Blickwinkelbereichs genau einen Punkt des zugehörigen darzustellenden Symbols (28) generieren,
aufeinander Abstimmen der Oberflächenstrukturen der einzelnen Oberflächenelemente der Oberflächenelementen-Gruppe derart, dass bei beliebigen Beobachtungsbedingungen immer nur eine Auswahl bestimmter Oberflächenelemente dieser Gruppe das einfallende Licht in Richtung eines Beobachters beugt,
aufeinander Abstimmen der Oberflächenstrukturen der einzelnen Oberflächenelemente der Oberflächenelementen-Gruppe derart, dass nach einer Änderung des Einfallswinkels des Lichtes und/oder des Beobachtungswinkels andere Oberflächenelemente derselben Oberflächenelementen-Gruppe das einfallende Licht zu dem Beobachter lenken, so dass der Punkt an einem anderen Ort sichtbar ist,
Einrichten mehrerer Oberflächenelementen-Gruppen derart, dass diese jeweils einen Punkt des darzustellenden Symbols (28) generieren, wobei sich das dazustellende Symbol (28) aus der Summe aller von zugehörigen Oberflächenelementen-Gruppen generierten Punkte derart zusammensetzt, dass durch die Veränderung des Einfallswinkels des Lichts und/ oder des Beobachtungswinkels von einem Beobachter eine Bewegung des Symbols in dem Beobachtungsraum wahrgenommen wird und
Anordnen der Vielzahl von diffraktiven Oberflächenelementen (18) mit dreidimensionalen Oberflächenstrukturen auf einem Trägerelement (10)
**dadurch gekennzeichnet, dass**
für einen Beobachter mehrere verschiedene Symbole (28) sichtbar sind.

15. Verfahren zur Herstellung eines Artikels, Wertdokuments, Sicherheitsdokuments oder Original-/Markenartikels umfassend: Herstellen einer Sicherheitseinrichtung gemäß Anspruch 14 und Anordnen der Sicherheitseinrichtung auf dem Artikel, Wertdokument, Sicherheitsdokument oder Original-/Markenartikel.

## Claims

1. A security device for improving counterfeit protection of original articles by the provision of a symbol comprising
a plurality of diffractive surface elements (18) arranged on a carrier element (10)
wherein the surface covered by the surface elements (18) on a carrier element (10) can occupy a partial region of any form of the carrier element,
wherein each individual surface element (18) has a three-dimensional surface structure, wherein a plurality of surface elements (18) form a surface element group whose surface structures and orientation are so matched to each other that they make precisely one point of the associated symbol (28) to be represented visible to an observer under given observation conditions,
wherein the surface structures of the individual surface elements of the surface element group are mutually matched in such a way that under random observation conditions always only a selection of particular surface elements of said group diffracts the incident light in the direction of an observer,
wherein the surface structures of the individual surface elements of the surface element group are mutually matched in such a way that after a change of the angle of incidence of the light and/or the observation angle, other surface elements of the same surface element group direct the incident light to the observer, such that the point is visible at a different place, wherein there are provided a plurality of surface element groups which respectively depict a point,
wherein each of the symbols (28) to be represented is composed of the sum of all points represented by associated surface element groups, and
wherein a movement of the symbol which is continuous for the observer in the observation space is perceived by the continuous change in the angle of incidence of the light and/or the observation angle,
**characterized in that**
a plurality of different symbols (28) is visible to an observer.

2. A security device as set forth in claim 1 **characterised in that** a movement of the symbol (28) which is continuous for the observer is perceived by the uniform change in the angle of incidence of the light and/or the observation angle, wherein said movement follows in particular a curved path (32), wherein the curvature of the path (32) can advantageously be extended in such a way that the observer perceives an almost linear movement of the symbol (28).

3. A security device as set forth in one of claims 1 and 2 **characterised in that** a surface of the carrier element (10) is covered with surface elements (18) to at least 10%, in particular at least 30% and particularly preferably at least 50%, wherein the surface elements (18) are provided in an irregular arrangement on the carrier element (10) in such a way that the visible symbols (28) are produced for the respective observation position preferably by less than 10% and in particular less than 5% of the surface elements.

4. A security device as set forth in one of claims 1 through 3 **characterised in that** the surface elements (18) are applied to a carrier element (10) by a preferably radiation-hardening lacquer being applied to the surface (14) of a carrier element (10), and by the surface elements (18) being structured by way of a shaping element and thereafter hardened, wherein the hardened lacquer layer after shaping of the surface elements (18) is of a thickness of between 0.5 and 300 µm, preferably between 0.8 and 50 µm, particularly preferably between 1 and 10 µm.

5. A security device as set forth in one of claims 1 through 3 **characterised in that** the carrier element (10) comprises a thermoplastic material and/or has thermoplastic material into which the surface elements (18) are structured by way of a shaping element, preferably by means of an embossing process, advantageously using pressure and/or heat.

6. A security device as set forth in one of claims 1 through 5 **characterised in that** it has at least one light-reflecting layer, wherein a light-reflecting layer is preferably applied to the surface elements (18) or the underside (12) of the carrier element (10), wherein the light-reflecting layer preferably has a thin-film layer element or a metal, preferably aluminum, silver, copper, gold or chromium.

7. A security device as set forth in one of claims 1 through 6 **characterised in that** one or more symbols (28) are particularly emphasized in their light intensity to an observer.

8. A security device as set forth in one of claims 1 through 7 **characterised in that** the surface structure of the individual surface elements (18) is in the form of a diffractive element, wherein it is preferably different in its amplitude and/or its grating spacing and/or its orientation, wherein the grating constants simultaneously used over all surface structures are advantageously between ≤ 500 nm and ≥ 1500 nm, preferably between ≤ 300 nm and ≥ 5000 nm and the size relationship of the largest to the smallest of the simultaneously applied grating constants of the surface structures is advantageously at least 3:1, preferably at least 10:1.

9. A security device as set forth in one of claims 1 through 8 **characterised in that** it is combined with other security features and/or classes of substances which preferably have diffractive, refractive, reflective, polarizing, phase-shifting, electrically conductive, magnetic, colored, fluorescent, phosphorescent, other luminescent properties and/or electronic components.

10. A security device as set forth in one of claims 1 through 9 **characterised in that** the security device is adapted to be machine-readable.

11. A security device as set forth in one of claims 1 through 10 **characterised in that** it is produced with other diffractive and/or refractive features by means of a common shaping element, wherein the resulting security device represents the different features in spatial separation or advantageously in the form of mutual superpositioning.

12. A security device as set forth in one of claims 1 through 11 **characterised in that** the security device is a security thread, tear-open thread, security strip, security band, patch or label for application to a carrier material, wherein the carrier material preferably comprises paper, polymer and/or a paper-like composite material.

13. An article, advantageously a value-bearing document like for example a bank note or security document like for example an identity document or original/brand-name article like for example pharmaceuticals, spirits, tobacco products, technical components, luxury goods and the like, with a security device as set forth in one of the preceding claims.

14. A process for the production of a security device by the provision of a symbol comprising the steps:
generating digital information relating to the configuration of three-dimensional surface structures on a plurality of surface elements (18) by
forming surface element groups from a plurality of surface elements (18),
mutually matching the surface structures and orientation of the surface elements of a group of surface elements in such a way that within a viewing angle range they generate precisely one point of the associated symbol (28) to be represented,
mutually matching the surface structures of the individual surface elements of the surface element group in such a way that under random observation conditions always only a selection of particular surface elements of this group diffracts the incident light in the direction of an observer,
mutually matching the surface structures of the individual surface elements of the surface element group in such a way that after a change of the angle of incidence of the light and/or the observation angle, other surface elements of the same surface element groups direct the incident light to the observer, such that the point is visible at a different place,
setting up a plurality of surface element groups such that they respectively generate a point of the symbol (28) to be represented, wherein f the symbol (28) to be represented is composed of the sum of all points generated by associated surface element groups in such a way that a movement of the symbol in the observation space is perceived by an observer by the change in the angle of incidence of the light and/or the observation angle, and
arranging the plurality of diffractive surface elements (18) with three-dimensional surface structures on a carrier element (10),
**characterized in that**
a plurality of different symbols (28) is visible to an observer.

15. A process for the production of an article, value-bearing document, security document or original/brand-name article comprising:
producing a security device as set forth in claim 14 and arranging the security device on the article, value-bearing document, security document or original/brand-name article.

## Revendications

1. Dispositif de sécurité pour améliorer la sécurité contre les falsifications d'articles originaux en prévoyant un symbole, comprenant
une pluralité d'éléments de surface (18) diffractifs disposés sur un élément de support (10),
la surface recouverte par les éléments de surface (18) sur un élément de support (10) pouvant être une partie de toute forme possible de l'élément de support,
chaque élément de surface (18) individuel ayant une structure tridimensionnelle,
plusieurs éléments de surface (18) formant un groupe d'éléments de surface dont les structures de surface et l'orientation sont adaptées les unes aux autres de façon qu'elles rendent visible, sous des conditions d'observation données, précisément un point du symbole (28) correspondant à représenter,
les structures de surface des éléments de surface individuels du groupe d'éléments de surface étant adaptées les unes aux autres de façon que, sous des conditions quelconques d'observation, seule une sélection de certains éléments de surface de ce groupe ne diffracte la lumière incidente en direction d'un observateur,
les structures de surface des éléments de surface individuels du groupe d'éléments de surface étant adaptées les unes aux autres de façon que, après un changement de l'angle d'incidence de la lumière et/ou de l'angle d'observation, d'autres éléments de surface du même groupe d'éléments de surface orientent la lumière incidente vers l'observateur, si bien que le point soit visible à un autre endroit,
plusieurs groupes d'éléments de surface étant prévus qui reproduisent chacun un point,
chaque symbole (28) à représenter se composant de la somme de tous les points représentés par les groups d'élément de surface associés
et,
par le changement continu de l'angle d'incidence de la lumière et/ou de l'angle d'observation, un mouvement continu du symbole étant aperçu dans l'espace d'observation,
**caractérisé en ce que**,
pour un observateur, plusieurs symboles (28) différents sont visibles.

2. Dispositif de sécurité selon la revendication 1, **caractérisé en ce que**, par le changement uniforme de l'angle d'incidence de la lumière et/ou de l'angle d'observation, un mouvement continu du symbole (28) est aperçu par l'observateur, ce mouvement suivant notamment une trajectoire courbe (32), la courbure de la trajectoire (32) pouvant être avantageusement étirée de façon que l'observateur aperçoive un mouvement presque linéaire des symboles (28).

3. Dispositif de sécurité selon l'une des revendications 1 à 2, **caractérisé en ce qu'**une surface de l'élément de support (10) est recouverte à au moins 10 %, plus particulièrement à au moins 30 % et de façon particulièrement préférée à au moins 50 %, d'éléments de surface (18), les éléments de surface (18) se présentant selon une disposition irrégulière et étant formés sur l'élément de support (10) d'une manière telle que les symboles (28) visibles soient engendrés pour la position d'observation respective par de préférence moins de 10 %, notamment par moins de 5 % des éléments de surface.

4. Dispositif de sécurité selon l'une des revendications 1 à 3, **caractérisé en ce que** les éléments de surface (18) sont déposés sur un élément de support (10) en déposant sur la surface (14) d'un élément de support (10) un vernis durcissant de préférence par rayonnement et en structurant les éléments de surface (18) par un élément de formage et puis en les durcissant, la couche de vernis durcie présentant après le formage des éléments de surface (18) une épaisseur de 0,5 à 300 µm, de préférence de 0,8 à 50 µm, de manière particulièrement préférée de 1 à 10 µm.

5. Dispositif de sécurité selon l'une des revendications 1 à 3, **caractérisé en ce que** l'élément de support (10) consiste en un matériau thermoplastique et/ou comprend un matériau thermoplastique dans lequel les éléments de surface (18) sont structurés à l'aide d'un élément de formage, de préférence selon un procédé d'estampage, avantageusement en appliquant de la pression et/ou de la chaleur.

6. Dispositif de sécurité selon l'une des revendications 1 à 5, **caractérisé en ce qu'**elle comprend au moins une couche réfléchissant de la lumière, une couche réfléchissant de la lumière étant déposée de préférence sur les éléments de surface (18) ou la face inférieure de l'élément de support (10), la couche réfléchissant de la lumière comprenant de préférence un élément de couche mince ou un métal, de préférence de l'aluminium, de l'argent, du cuivre, de l'or ou du chrome.

7. Dispositif de sécurité selon l'une des revendications 1 à 6, **caractérisé en ce que**, pour un observateur, un ou plusieurs symboles (28) se distinguent plus particulièrement par leur intensité de lumière.

8. Dispositif de sécurité selon l'une des revendications 1 à 7, **caractérisé en ce que** la structure de surface des différents éléments de surface (18) est formée comme un élément diffractif, elle se distinguant de préférence par son amplitude et/ou son espacement de réseau et/ou son orientation, les constantes de réseau appliquées en même temps à toutes les structures de surface étant avantageusement entre ≤ 500 nm et ≥ 1500 nm, de préférence entre ≤ 300 nm et ≥ 5000 nm, et le rapport de valeur entre la plus grande et la plus petite des constantes de réseau simultanément appliquées des structures de surface étant avantageusement au moins 3 : 1, de préférence au moins 10 : 1.

9. Dispositif de sécurité selon l'une des revendications 1 à 8, **caractérisé en ce qu'**il est combiné avec d'autres caractéristiques de sécurité et/ou classes de matière qui présentent de préférence des caractéristiques diffractives, réfractives, réfléchissantes, polarisantes, de décalage de phase, de conductivité électrique, magnétiques, colores, fluorescentes, phosphorescentes, autrement luminescentes et/ou des composantes électroniques.

10. Dispositif de sécurité selon l'une des revendications 1 à 9, **caractérisé en ce que** le dispositif de sécurité est conformé de façon à pouvoir être lu par une machine.

11. Dispositif de sécurité selon l'une des revendications 1 à 10, **caractérisé en ce qu'**il est produit ensemble avec d'autres caractéristiques diffractives et/ou réfractives à l'aide d'un élément de formage commun, le dispositif de sécurité résultant représentant les différentes caractéristiques de façon espacée dans l'espace ou avantageusement sous la forme d'une superposition réciproque.

12. Dispositif de sécurité selon l'une des revendications 1 à 11, **caractérisé en ce que** le dispositif de sécurité est un fil de sécurité, un fil de déchirage, une bande de sécurité, un ruban de sécurité, une bande de sécurité, un patch ou une étiquette, destiné à être déposé sur un matériau de support, le matériau de support consistant de préférence en papier, polymère et/ou un matériau composite ressemblant à du papier.

13. Article, avantageusement un document de valeur tel que, par exemple, un billet de banque, ou un document de sécurité tel que, par exemple, un document personnel, ou un article original ou de marque tel que, par exemple, des produits pharmaceutiques, des spiritueux, des produits en tabac, des composants techniques, des biens de luxe etc., avec un dispositif de sécurité selon l'une des revendications précédentes.

14. Procédé de fabrication d'un dispositif de sécurité en prévoyant un symbole, comprenant les étapes de :
engendrer des informations numériques pour conformer des structures de surface tridimensionnelles sur une pluralité d'éléments de surface (18) par
formation de groupes d'éléments de surface à partir de plusieurs éléments de surface (18),
adapter, les unes aux autres, les structures de surface et orienter les éléments de surface individuels d'un groupe d'éléments de surface de façon telle qu'ils engendrent, à l'intérieur d'une zone d'angle de regard, précisément un point du symbole (28) correspondant à représenter,
adapter, les unes aux autres, les structures de surface des éléments de surface individuels du groupe d'éléments de surface de façon que, sous des conditions quelconques d'observation, seule une sélection de certains éléments de surface de ce groupe ne diffracte la lumière incidente en direction d'un observateur,
adapter, les unes aux autres, les structures de surface des éléments de surface individuels du groupe d'éléments de surface de façon telle que, après un changement de l'angle d'incidence de la lumière et/ou de l'angle d'observation, d'autres éléments de surface du même groupe d'éléments de surface orientent la lumière incidente vers l'observateur, si bien que le point soit visible à un autre endroit,
agencer plusieurs groupes d'éléments de surface d'une façon telle que ceux-ci engendrent chacun un point du symbole (28) correspondant à représenter, le symbole (28) à représenter se composant de la somme de tous les points représentés par les groups d'élément de surface associés e façon telle que, par le changement continu de l'angle d'incidence de la lumière et/ou de l'angle d'observation, un mouvement continu du symbole est aperçu dans l'espace d'observation, et
disposer la pluralité d'éléments de surface (18) diffractifs ayant des structures de surface tridimensionnelles sur un élément de support (10),
**caractérisé en ce que**,
pour un observateur, plusieurs symboles (28) différents sont visibles.

15. Procédé de fabrication d'un article, d'un document de valeur, d'un document de sécurité ou d'un article original ou de marque, comprenant : la fabrication d'un dispositif de sécurité selon la revendication 14 et la disposition du dispositif de sécurité sur l'article, le document de valeur, le document de sécurité ou l'article original ou de marque.
